# EUROPÄISCHE PATENTSCHRIFT

(11) **EP 2 640 606 B1**
(45) Veröffentlichungstag und Bekanntmachung des Hinweises auf die Patenterteilung: **10.01.2018**
(21) Anmeldenummer: 11787823.1
(22) Anmeldetag: 16.11.2011
(51) Int. Cl.: B60R 11/04, G03B 17/02

(54) **GESICHERTE VERSTELLVORRICHTUNG**
SECURED ADJUSTING DEIVCE
DISPOSITIF DE RÉGLAGE SÉCURISÉ

(30) Priorität: 16.11.2010 DE 102010060610
(43) Veröffentlichungstag der Anmeldung: 25.09.2013
(73) Patentinhaber: Huf Hülsbeck & Fürst GmbH & Co. KG, 42551 Velbert (DE)
(72) Erfinder: BARTHEL, Joachim, 45329 Essen (DE)
(86) Internationale Anmeldenummer: PCT/EP2011/070270
(87) Internationale Veröffentlichungsnummer: WO 2012/066046

(56) Entgegenhaltungen:
- DE-A1-102005 052 031
- DE-T2-602004 003 255
- FR-A1- 2 493 780

## Beschreibung

Die Erfindung betrifft eine Verstellvorrichtung für Fahrzeuge oder dergleichen gemäß dem Oberbegriff von Anspruch 1 mit zumindest einem Schutzelement, insbesondere in Form eines Deckels, um einen Innenbereich hinter dem Schutzelement verschließbar auszugestalten. Ferner ist die Verstellvorrichtung mit einer Funktionseinheit, die hinter dem Schutzelement im Innenbereich angeordnet ist, ausgestattet und mit zumindest einem Antrieb, wodurch das Schutzelement zumindest zwischen zwei Endpositionen bewegbar ist, nämlich in eine Schließposition, in der das Schutzelement den Innenbereich verschließt, und in eine Öffnungsposition, in der das Schutzelement den Innenbereich öffnet.

Des Weiteren ist die vorliegende Erfindung auch auf ein Verfahren zum Betrieb einer Verstellvorrichtung für Fahrzeuge oder dergleichen gerichtet, die zumindest ein Schutzelement aufweist, insbesondere in Form eines Deckels, um einen Aus der DE102009015610 ist eine Verstellvorrichtung bekannt, mit zumindest einem Schutzelement (13), insbesondere in Form eines Deckels, um einen Innenbereich hinter dem Schutzelement verschließbar auszugestalten, und mit einer Funktionseinheit (11), die hinter dem Schutzelement (13) im Innenbereich angeordnet ist, und mit zumindest einem Antrieb (14, 24), wodurch das Schutzelement (13) zwischen zumindest zwei Endpositionen bewegbar ist, nämlich in eine Schließposition, in der das Schutzelement (13) den Innenbereich verschließt, und in eine Öffnungsposition, in der das Schutzelement (13) den Innenbereich öffnet, wobei die Funktionseinheit fest und einer Innenseite von dem Schutzelement befestigt ist und einer Bewegung des Schutzelementes folgt. Innenbereich hinter dem Schutzelement verschließbar auszugestalten, gemäß dem Oberbegriff von Anspruch 14.

Aus dem Stand der Technik ist die Druckschrift DE 103 51 363 A1 bekannt, bei der eine Kameraeinheit direkt an dem Schutzelement angeordnet ist und mit diesem verschwenkt wird, wenn das Schutzelement von seiner Schließposition in eine Öffnungsposition überführt wird. In der Öffnungsposition ist dann die Kameraeinheit für eine Bilderfassung bereit. Zum Verstellen des Schutzelementes ist bei dieser Verstellvorrichtung ein Antriebsmotor vorgesehen, der automatisch abgeschaltet wird, wenn das Schutzelement die Endpositionen erreicht. Bei der offenbarten Verstellvorrichtung hat es sich als nachteilig herausgestellt, dass die Endpositionen nur schwer im Betrieb gehalten werden, da mechanische Erschütterungen zu einer Verstellung des Schutzelementes aus den Endpositionen führen können. In der Öffnungsposition nimmt somit die Kameraeinheit nicht mehr den gewünschten Bereich auf. In der Schließfunktion kann es zu einem störenden Klappern des Schutzelementes kommen, wobei zusätzlich Spritzwasser, Verschmutzungen und dergleichen in den Innenbereich der Verstellvorrichtung eindringen können.

Aus der DE602004003255T2 ist eine Verstellvorrichtung bekannt, bei welcher.

Aufgabe der vorliegenden Erfindung ist es somit eine robuste Verstellvorrichtung zu schaffen, die auch äußeren mechanischen Einwirkungen Stand hält. Ferner ist es Aufgabe der vorliegenden Erfindung, ein entsprechendes Verfahren zum sicheren Betrieb einer derartigen Verstellvorrichtung bereitzustellen, das auch äußeren mechanischen Einwirkungen Stand hält.

Die vorliegende Aufgabe wird durch eine Verstellvorrichtung für Fahrzeuge, insbesondere Kraftfahrzeuge oder dergleichen mit den Merkmalen gemäß dem Patentanspruch 1, insbesondere aus dem kennzeichnenden Teil, gelöst.

Erfindungsgemäß ist es bei der Verstellvorrichtung vorgesehen, dass das Schutzelement im Bereich der Endpositionen zusätzlich form- und/oder kraftschlüssig fixiert ist, um somit das Schutzelement auch bei störenden mechanischen Einwirkungen in diesen Endpositionen zu halten. Dabei wird das Schutzelement selbstständig, d. h. ohne eine Antriebsleistung vom Antrieb, sicher gehalten. Damit ist sichergestellt, dass das Schutzelement in seiner Schließposition sicher mit einer Dichtung zusammenwirkt, um Spritzwasser, Schmutz und dergleichen aus dem Innenbereich der Verstellvorrichtung fernzuhalten. Auch ist dadurch ein guter Diebstahlschutz erzielbar. In der Öffnungsposition verharrt das Schutzelement ebenfalls sicher durch die zusätzliche Fixierung des Form- und/oder Kraftschlusses, sodass z. B. eine Kamera als Funktionseinheit, die hinter dem Schutzelement angeordnet sein kann, ihren vorgegebenen Bilderfassungsbereich zuverlässig aufnehmen kann. Dieses ist selbst bei starken mechanischen Erschütterungen möglich, wenn z. B. das Fahrzeug über eine Schotterpiste oder grobe Bodenunebenheiten fährt. Folglich ist sichergestellt, dass sich das Schutzelement nicht bei diesen mechanischen Erschütterungen langsam von der Öffnungsposition in die Schließposition bewegt und umgekehrt.

Die Erfindung ist in diversen Ausgestaltungen durch die abhängigen Unteransprüche und die nachfolgende Beschreibung offenbart. Dabei gelten Merkmale und Details, die im Zusammenhang mit der erfindungsgemäßen Vorrichtung offenbart werden auch im Zusammenhang mit dem erfindungsgemäßen Verfahren und umgekehrt, so dass bzgl. der Offenbarung zu den einzelnen Erfindungsaspekten stets wechselseitig Bezug genommen wird.

Bei der erfindungsgemäßen Verstellvorrichtung kann es vorgesehen sein, dass die Funktionseinheit fest an einer Innenseite von dem Schutzelement befestigt ist und einer Bewegung des Schutzelementes folgt. Somit wird auch die Funktionseinheit weggeschwenkt, wenn auch das Schutzelement geschwenkt wird. Sofern das Schutzelement in der Schließposition ist, ist somit auch die Funktionseinheit unzugänglich in der Verstellvorrichtung angeordnet und gegen äußere Umwelteinflüsse geschützt. Ebenfalls ist es denkbar, dass die Funktionseinheit im Innenbereich unabhängig vom Schutzelement fest oder bewegbar angeordnet ist und trotzdem durch das Schutzelement in der Schließposition unzugänglich von der Außenseite geschützt ist. Je nach Anwendungsbereich kann somit die Funktionseinheit an bzw. in der Verstellvorrichtung angeordnet sein. Hierbei ist es insbesondere von Interesse, eine gute Zugänglichkeit der Funktionseinheit in der Öffnungsposition des Schutzelementes zu erreichen. Die Funktionseinheit kann dabei selbst eine Kameraeinheit, einen Schließzylinder und/oder ein Betätigungselement aufweisen. Bei einer Kameraeinheit als Funktionseinheit ist sicherzustellen, dass ein optimaler Blickwinkel für das Objektiv der Kameraeinheit gewährleistet ist, wenn das Schutzelement in der Öffnungsposition steht. Zu diesem Zweck kann die Kameraeinheit an einem beweglichen Schlitten oder einer Bewegungsmechanik angeordnet sein, um diese relativ zum Schutzelement und der übrigen Verstellvorrichtung zu bewegen. Selbstverständlich kann auch ein Schließzylinder und/oder ein Betätigungselement beweglich zur Verstellvorrichtung angeordnet sein. Hierdurch lassen sich technisch sehr komfortable Verstellvorrichtungen für Fahrzeuge erreichen, die besonders einfach zu bedienen sind. Sofern die Funktionseinheit auch ein Betätigungselement oder einen Schließzylinder aufweist, kann das Schutzelement über einen Näherungssensor oder einen Berührungssensor angesteuert werden, um das Schutzelement in seinen Endpositionen zu bewegen. Selbstverständlich kann auch das Schutzelement automatisch angesteuert werden, wenn die Funktionseinheit durch eine Kameraeinheit realisiert wird. Hierbei kann z. B. durch das Einlegen eines Rückwärtsganges eine automatische Ansteuerung des Schutzelementes in die Öffnungsposition erfolgen. Eine Bilddarstellung der erfassten Bilder von der Kameraeinheit kann auf einem Monitor oder Display im Fahrzeuginneren angezeigt werden. Das Schutzelement selbst kann an seiner Außenseite in Fahrzeugfarbe lackiert sein oder eine verchromte Oberfläche aufweisen. Auch ist es denkbar, dass an der Außenseite des Schutzelementes ein Herstelleremblem angeordnet sein kann.

Ebenfalls wird durch die zusätzliche Fixierung des Schutzelementes im Bereich der Endpositionen durch den zusätzlichen vorgesehenen Form- oder Kraftschluss der Einbruch- und Diebstahlschutz deutlich verbessert, da sich das Schutzelement aus der Schließposition nur durch massive Gewalteinwirkung verstellen lässt, wobei gleichzeitig eine Zerstörung der Verstellvorrichtung die Folge ist. Normale Aufbruchsversuche mit der Hand oder einem einfachen Schraubendreher führen hingegen nicht zu einer ungewollten Öffnung des Schutzelementes.

Erfindungsgemäß kann es ebenfalls vorgesehen sein, dass der zusätzliche Form- und/oder Kraftschluss im Bereich der Endposition durch ein (zusätzliches) Rastmittel erzeugbar ist. Dieses Rastmittel kann einen federbelasteten Vorsprung aufweisen, der mit einer Ausnehmung als Gegenrastmittel form- und/oder kraftschlüssig zusammenwirkt. Das Rastmittel kann dabei direkt mit dem Schutzelement, eine Antriebsmechanik und/oder dem Antrieb mechanisch zusammenwirken. Das entsprechende Gegenrastmittel ist dann an einem Gehäuse der Verstellvorrichtung oder an einem anderen Element als dem Rastmittel angeordnet, damit Rastmittel und Gegenrastmittel form- und/oder kraftschlüssig zusammenwirken können. Das Rastmittel kann aus einer federbelasteten Kugel, einer Blattfeder mit Vorsprung, oder einem nachgiebigen Vorsprung bestehen. Selbstverständlich ist auch eine kinematische Umkehr zwischen dem bereits erwähnten Rastmittel und dem Gegenrastmittel denkbar, um den zusätzlichen Form- und/oder Kraftschluss im Bereich der Endpositionen des Schutzelementes zu erzeugen.

Bei einer besonderen Variante der vorliegenden erfindungsgemäßen Verstellvorrichtung kann es vorgesehen sein, dass eine Antriebsmechanik zwischen dem Antrieb und dem Schutzelement angeordnet ist und der zusätzliche Kraftschluss durch einen elastisch verformbaren Bereich, insbesondere von der Antriebsmechanik, dem Antrieb und/oder dem Schutzelement, erzeugbar ist. Somit kann auf das zusätzliche Rastmittel und Gegenrastmittel als gesondertes Element verzichtet werden und trotzdem wird das Schutzelement im Bereich der Endposition durch den zusätzlichen Form- und/oder Kraftschluss im Bereich der Endpositionen belastet bzw. fixiert. Durch den elastisch verformbaren Bereich ist es möglich, eine gewollte Verformung der Antriebsmechanik im Bereich der Endpositionen zu erzeugen, die zu dem gewünschten zusätzlichen Form- und/oder Kraftschluss im Bereich der Endposition des Schutzelementes führt. Hierzu kann insbesondere ein Verbindungselement der Antriebsmechanik vorgesehen sein, welches insbesondere über einen elastischen Bereich verfügt. Dieses Verbindungselement kann z. B. hebelartig ausgestaltet sein, wobei der elastische Bereich z. B. als Einschnürung, Querschnittsverjüngung, Gummi- oder Federelement oder dergleichen ausgestaltet sein kann. Durch die bewusste elastische Verformung des Verbindungselementes kann dann der zusätzliche Kraftschluss im Bereich der Endpositionen des Schutzelementes erzeugt werden. Der elastische Bereich kann aber auch im Bereich einer drehfesten Verbindung zwischen zwei Elementen der Antriebsmechanik vorgesehen sein, wodurch die gewünschte Verformung an dieser Stelle erreichbar ist. Somit ist der elastische Bereich nicht auf ein hebelförmiges Verbindungselement in der Antriebsmechanik beschränkt, sondern der elastische Bereich kann komplett zwischen der Antriebsseite vom Antrieb und der Abtriebsseite an das Schutzelement vorgesehen sein.

Ebenfalls kann es erfindungsgemäß vorgesehen sein, dass der Antrieb und/oder die Antriebsmechanik (z. B. als Schneckengetriebe, Vielgelenkgetriebe) selbsthemmend ausgestaltet ist, sodass eine Verstellung des Schutzelementes ausschließlich über den Antrieb erfolgt. Aufgrund der Selbsthemmung ist es nicht möglich, von der Abtriebsseite, d. h. durch das Schutzelement, eine Bewegung der Antriebsmechanik oder des Antriebes zu erzeugen. Damit ist das Schutzelement grundsätzlich in jeder Position gehalten, weil die Selbsthemmung eine Verstellung des Schutzelementes durch eine mechanische Einwirkung direkt auf das Schutzelement unmöglich macht. Somit kann das Schutzelement nur durch den Antrieb zwischen den Endpositionen verfahren werden. Zusätzlich wird im Bereich der Endposition der gewünschte Form- und/oder Kraftschluss erzeugt, um störenden Einflüsse von Antriebsseite zu unterdrücken.

Bei der erfindungsgemäßen Verstellvorrichtung ist es ebenfalls denkbar, dass zumindest der Antrieb für das Schutzelement in einer Antriebseinheit angeordnet ist und das Schutzelement an eine Aktiveinheit vorgesehen ist, und das die Antriebseinheit im zusammengebauten Zustand der Verstellvorrichtung bewegbar zur Aktiveinheit ausgestaltet ist, wobei insbesondere die Antriebseinheit in einer Befestigungslage fest mit der Aktiveinheit verbunden ist. Folglich ist die Antriebseinheit der Verstellvorrichtung nicht starr zur Aktiveinheit ausgestaltet, sondern kann vielmehr in einer Montagelage relativ zur Aktiveinheit bewegt werden. Durch diese zusätzliche Bewegungsmöglichkeit ist eine einfache Montage der erfindungsgemäßen Verstellvorrichtung an einem Trägerelement möglich. Hierbei kann die Verstellvorrichtung auch durch eine kleine Öffnung in dem Trägerelement durchgeführt werden, um anschließend an dem Trägerelement befestigt zu werden. Zu diesem Zweck kann die Antriebseinheit mit der Aktiveinheit in der Montagelage in eine lang gestreckte Lage verstellt werden, um somit auch eine einseitige Durchführungen der Verstellvorrichtung durch die Öffnung am Trägerelement deutlich zu erleichtern. Folglich kann auf eine beidseitige Montage der Verstellvorrichtung an dem Trägerelement verzichtet werden. Sobald die Verstellvorrichtung mit der Antriebseinheit und teilweise der Aktiveinheit durch die Öffnung des Trägerelementes hindurch geschoben worden ist, lässt sich die Antriebseinheit an die Aktiveinheit heranschwenken, um die Befestigungslage einzunehmen. In dieser Befestigungslage ist die Antriebseinheit mit der Aktiveinheit über Haltemittel und Gegenhaltmittel form- und/oder kraftschlüssig verbunden.

Ferner kann es im Rahmen der Erfindung vorgesehen sein, dass die Antriebseinheit mechanisch über zumindest einen Teil der Antriebsmechanik, insbesondere dem Verbindungselement, mit der Aktiveinheit verbunden ist, um die Antriebsleistung des Antriebes auf das Schutzelement zu übertragen. Die Antriebsmechanik kann hierbei als einfaches Zahnradgetriebe, Vielgelenkgetriebe oder dergleichen ausgestaltet sein. Das zuvor erwähnte Verbindungselement kann als ein Dreh- bzw. Schwenkhebel realisiert werden, wobei das Verbindungselement an dem einen Ende mit der Antriebseinheit und an dem anderen Ende mit der Aktiveinheit verbunden ist. Die Verbindung zwischen der Antriebseinheit und dem Verbindungselement kann als eine geschlossene Führung, insbesondere in Form eines Langloches und eines Kulissensteins ausgestaltet sein. Die Verbindung zwischen dem Verbindungselement und der Aktiveinheit kann hingegen als eine drehfeste Verbindung durch einen Vierkant-, Vielzahn- oder eine Klemmverbindung realisiert werden. Ebenfalls ist es denkbar, dass die Antriebsleistung über zwei Verbindungselemente auf die Antriebseinheit übertragen wird. Selbstverständlich kann die Antriebseinheit auch zwei Antriebe aufweisen, um das Schutzelement unabhängig von der Funktionseinheit relativ zur Verstellvorrichtung zu bewegen. Sofern nur ein Antrieb zum Einsatz kommt, kann die Antriebsleistung über die Antriebsmechanik getrennt für das Schutzelement und die Verstellung der Funktionseinheit bereit gestellt werden.

Die zuvor genannte Aufgabe der Erfindung kann auch durch ein Verfahren zum Betrieb einer Verstellvorrichtung für Fahrzeuge oder dergleichen mit den technischen Merkmalen aus dem unabhängigen Anspruch 14, insbesondere aus dem kennzeichnenden Teil, gelöst werden. Dabei ist es erfindungsgemäß vorgesehen, dass das Schutzelement im Bereich der Endposition zusätzlich form- und/oder kraftschlüssig fixiert wird, um das Schutzelement auch bei störenden mechanischen Einwirkungen in diesen Endpositionen sicher zu halten.

Das erfindungsgemäße Verfahren zum Betrieb der Verstellvorrichtung kann mit der erfindungsgemäßen Verstellvorrichtung gemäß der Ansprüche 1 bis 13 durchgeführt werden. Ebenfalls dient die erfindungsgemäße Verstellvorrichtung auch zur Durchführung des erfindungsgemäßen Verfahrens.

Weitere Vorteile, Merkmale und Einzelheiten der Erfindung ergeben sich aus der nachfolgenden Beschreibung, in der unter Bezugnahme auf die Zeichnungen die Erfindung in mehreren Ausführungsbeispielen beschrieben ist. Dabei können die in den Ansprüchen und in der Beschreibung erwähnten Merkmale einzeln für sich oder in beliebiger Kombination erfindungswesentlich sein. Es zeigen:
- Fig. 1: eine Seitenansicht der erfindungsgemäßen Verstellvorrichtung in einer Öffnungsposition,
- Fig. 2: die Verstellvorrichtung aus Figur 1 in einer Schließposition, bei der eine Funktionseinheit unzugänglich ist,
- Fig. 3: eine dreidimensionale Ansicht der Verstellvorrichtung aus Figur 1 und 2, in einer Montagelage,
- Fig. 4a: eine schematische Ansicht zur Funktionsweise einer Antriebsmechanik der Verstellvorrichtung mit einem elastischen Bereich, wobei eine gewünschte Verformung vorliegt,
- Fig. 4b: eine vergleichbare Ansicht der Antriebsmechanik aus Figur 4a jedoch ohne eine Verformung,
- Fig. 5a: eine schematische Ansicht zur Antriebsmechanik (vergleichbar zu den Figuren 4a, b) mit einem zusätzlichen Rastmittel,
- Fig. 5b: eine schematische Ansicht der Antriebsmechanik aus Figur 5a mit einem eingerasteten Rastmittel, bei der ein zusätzlicher Form- und Kraftschluss vorliegt,
- Fig. 5c: eine schematische Ansicht zu einer Variante des Rastmittels aus den Figuren 5a und b in Zusammenwirkung mit dem Gegenrastmittel,
- Fig. 5d: eine schematische Ansicht eines weiteren Rastmittels und Gegenrastmittels im Vergleich zu den Figuren 5a, b und c sowie
- Fig. 6: eine schematische Seitenansicht auf die wesentlichen Antriebselemente der erfindungsgemäßen Verstellvorrichtung mit einer weiteren Variante für das zusätzliche Rast- und Gegenrastmittel.

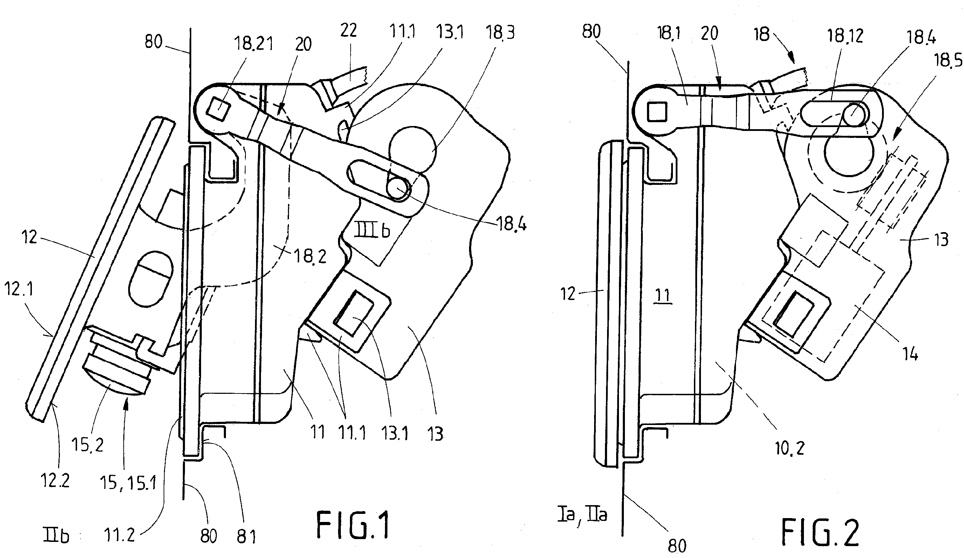

In den Figuren 1 bis 3 ist ein erstes Ausführungsbeispiel der erfindungsgemäßen Verstellvorrichtung 10 dargestellt. In der Figur 1 ist ein Schutzelement 12 von der Verstellvorrichtung 10 in seiner Öffnungsposition IIb gezeigt, bei der eine Funktionseinheit 15 zugänglich von dem Außenbereich 10.1 der Verstellvorrichtung 10 ist. Bei der dargestellten Funktionseinheit 15 handelt es sich um eine Kamera 15.1, die über ein Objektiv 15.2 eine Bilderfassung ermöglich und im Innenbereich 10.2 der Verstellvorrichtung 10 angeordnet ist. Die von der Kamera 15.1 erfassten Bilddaten können in einem Fahrzeug auf einem Display oder Monitor angezeigt werden. Die Verstellvorrichtung 10 kann insbesondere im Heckbereich eines Fahrzeuges angeordnet sein, um z. B. eine Rückwärtsfahrt zu erleichtern. Die Verstellvorrichtung 10 kann selbst an einem Trägerelement 80 befestigt sein, wobei es sich bei dem Trägerelement 80 um ein Karosserieteil, eine Heckschürze oder ein sonstiges Anbauteil eines Fahrzeuges handeln kann. Um die Verstellvorrichtung 10 auf einfache Art und Weise an dem Trägerelement 80 anzuordnen, kann eine Öffnung 81 im Trägerelement 80 vorgesehen sein. Bei einer besonders eleganten Ausgestaltung der Erfindung, kann im Trägerelement 80 eine Umbördelung 81 vorgesehen sein, wodurch die Verstellvorrichtung 10, insbesondere mit ihrem Schutzelement 12 annähernd flächenbündig zur Oberfläche des Trägerelementes 80 angeordnet ist.

Damit nun das Schutzelement 12 in seiner Öffnungsposition IIb verharrt, ist ein zusätzlicher Form- und/oder Kraftschluss im Bereich der Endpositionen vorgesehen, der direkt oder indirekt auf das Schutzelement 12 wirkt. Somit kann sichergestellt werden, dass auch bei einer holprigen Wegstrecke die Funktionseinheit 15, insbesondere die Kamera 15.1, in ihrer gewünschten Position verbleibt, da es fest an einer Innenseite 12.2 von dem Schutzelement 12 angeordnet ist und der Bewegung des Schutzelementes 12 folgt. Die von der Kamera 15.1 aufgenommenen Bilder können über eine elektrische Leitung 22 an das Fahrzeuginnere weitergeleitet werden. Eine elektrische Energieversorgung der Verstellvorrichtung 10 kann über den seitlichen Stecker 23 an einer Antriebseinheit 13 erfolgen, in der auch der Antrieb 14, insbesondere als Elektromotor angeordnet ist. Die entsprechende Antriebsleistung des Antriebs 14 wird über die Antriebsmechanik 18 auf zumindest das Schutzelement 12 übertragen. Ebenfalls kann durch den Antrieb 14 auch die Funktionseinheit 15 unabhängig vom Schutzelement 12 relativ zur Verstellvorrichtung 10 bewegt werden. Hierfür kann die Funktionseinheit 15 an einem Schlitten oder Hebel der Antriebsmechanik 18 angeordnet sein und ist somit nicht fest mit dem Schutzelement 12 verbunden.

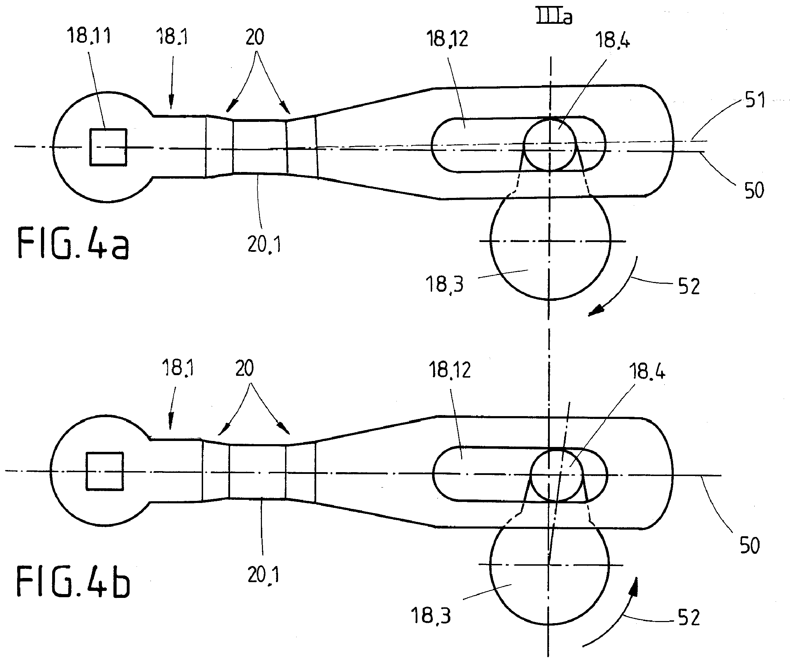

In der Figur 2 ist das Schutzelement 12 der Verstellvorrichtung 10 in seiner Schließposition IIa und Befestigungslage Ia dargestellt. Nachfolgend soll die Funktionsweise der Verstellvorrichtung 10 erläutert werden. Die Antriebsleistung vom Antrieb 14 wird über ein angedeutetes Schneckengetriebe 18.5 auf eine Zwischenwelle 18.3 als Drehbewegung übertragen. An der Zwischenwelle 18.3 ist exzentrisch ein Kulissenstein 18.4 angeordnet, der mit einer geschlossenen Führung 18.12 eines hebelförmigen Verbindungselementes 18.1 von der Antriebsmechanik 18 zusammenwirkt. Eine Drehung der Zwischenwelle 18.3 gegen den Uhrzeigersinn drückt das hebelförmige Verbindungselement 18.1 nach unten bzw. sorgt für eine Drehung im Uhrzeigersinn um eine Drehachse 18.21, die für einen festen Drehpunkt des Verbindungselementes 18.1 sorgt. Das Verbindungselement 18.1 ist mit der weiteren Drehachse 18.21 vom Hebel 18.2 drehfest verbunden, wozu ein entsprechender Vierkant als drehfeste Verbindung 18.11 vorgesehen ist. Durch die Drehung des hebelförmigen Verbindungselementes 18.1 im Uhrzeigersinn um die Drehachse 18.21 wird der Hebel 18.2, an dem auch das Schutzelement 12 angeordnet ist, ebenfalls im Uhrzeigersinn gedreht, wodurch es zu einer Aufstellung des Schutzelementes 12 in die Öffnungsposition IIb (s. Figur 1) kommt. Die maximale Öffnungsposition IIb wird durch einen Anschlag zwischen dem Hebel 18.2 und der Verstellvorrichtung 10 begrenzt. Somit lässt sich auch das hebelförmige Verbindungselement 18.1 nicht weiter im Uhrzeigersinn drehen bzw. niederdrücken, da ansonsten eine deutliche Verspannung der gesamten Antriebsmechanik 18 vorliegen würde. Der Antrieb 14 kann in den Endpositionen IIa, IIb jeweils abgeschaltet werden, da ein selbsthemmendes Getriebe in der Antriebsmechanik 18 vorliegt, welches allein durch das Schneckengetriebe 18.5 realisiert wird. Folglich kann nur eine Drehung von der Antriebswelle des Antriebs 14 zu einer Verstellung des Schutzelementes 12 führen und nicht umgekehrt. Um jedoch den Diebstahlschutz und die Funktionssicherheit der Verstellvorrichtung 10 zu verbessern, wird das Schutzelementes 12 durch einen zusätzlichen Form- und/oder Kraftschluss im Bereich der Endposition IIa und IIb gesichert, was aus den Figuren 4a bis 6 noch deutlich wird.

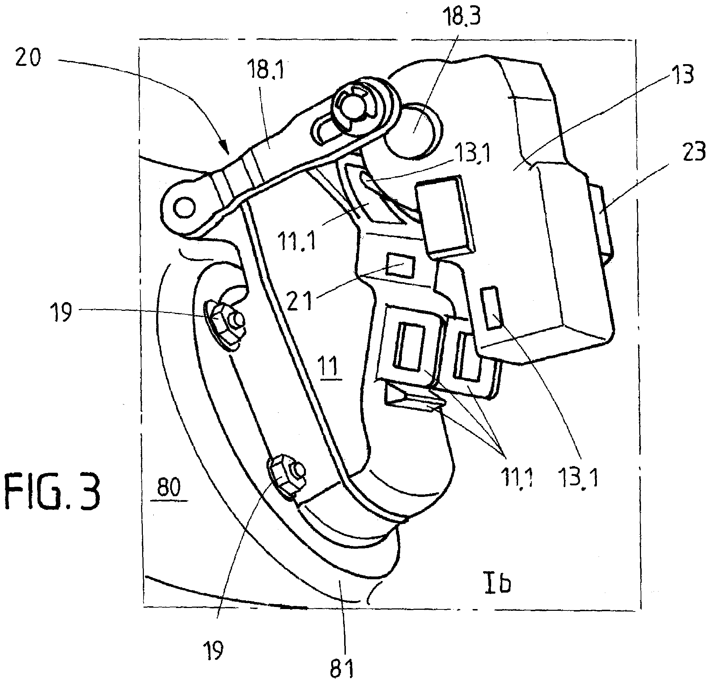

In der Figur 3 ist eine dreidimensionale Ansicht auf die Verstellvorrichtung 10 in einer Montagelage Ib dargestellt. Die erfindungsgemäße Verstellvorrichtung 10 weist den technischen Vorteil auf, dass sie besonders einfach auch bei kleinen Öffnungen an einem Trägerelement 80 im zusammengebauten Zustand zu montieren bzw. zu befestigen ist. Die entsprechende Montage kann dabei ausschließlich einseitig von einem Außenbereich 10.1 (s. Außenseite 12.1 des Schutzelementes 12) des Trägerelementes 80 erfolgen. Bei der Montage wird die Antriebseinheit 13 an die Aktiveinheit 11 herangeschwenkt, wobei zunächst ein oberes Haltemittel 13.1 hinter einem ebenfalls oberen Gegenhaltemittel 11.1 der Aktiveinheit 11 fährt bzw. kippt und dann die unteren Haltemittel 13.1 mit den entsprechenden unteren Gegenhaltemitteln 13.1 der Aktiveinheit 13 verrasten. Ferner ist ein Puffer 21 am Gehäuse der Aktiveinheit 11 derart angeordnet, dass dieser Puffer 21 zwischen den Gehäusen der Aktiveinheit 11 und der Antriebseinheit 13 zu liegen kommt. Durch diesen Puffer 21 wird erreicht, dass die beiden Einheiten 11, 13 spielfrei und somit klapperfrei in der Befestigungslage Ia zueinander angeordnet sind. Zwar ist in der Figur 2 die erfindungsgemäße Verstellvorrichtung 10 über die Aktiveinheit 11 und dafür vorgesehene Befestigungsmittel 19 an dem Trägerelement 80 befestigt, jedoch kann diese Befestigung auch erst dann vorgenommen werden, wenn zunächst die Verstellvorrichtung 10 von ihrer Montagelage Ib in die Befestigungslage Ia überführt worden ist. Durch die Antriebseinheit 13 wird die gesamte mechanische Antriebsleistung für die Verstellvorrichtung 10 erzeugt. Zusätzlich kann über die Antriebsmechanik 18 auch die Funktionseinheit 15 synchron zum Schutzelement 12 oder asynchron bewegt werden.

In der Figur 4a ist die Funktionsweise eines zusätzlichen Kraftschlusses zur Fixierung des Schutzelementes im Bereich der Endpositionen IIa, IIb schematisch dargestellt. Dabei befindet sich das hebelförmige Verbindungselement 18.1 in einer ungefähr waagerechten Lage (s. Figur 2, Schließposition IIa des Schutzelementes 12), sodass das Schutzelement 12 gegen eine Dichtung 11.2 an einem Rand der Verstellvorrichtung 10 gepresst wird, um die Verstellvorrichtung 10 sicher vor äußeren Umwelteinflüssen zu schützen. Wie aus der Figur 4a weiter zu erkennen ist, befindet sich der exzentrisch angeordnete Kulissenstein 18.4 von der Zwischenwelle 18.3 auf seiner höchsten Position (auf 12-Uhr-Stellung, IIIa), woraus deutlich wird, dass das hebelförmige Verbindungselement 18.1 nicht höher angehoben werden kann bzw. nicht weiter im Gegenuhrzeigersinn gedreht werden kann (s. Pfeil 52), da das Schutzelement 12 bereits an die Dichtung 11.2 in der Schließposition IIa anschlägt.

Das hebelförmige Verbindungselement 18.1 ist in der Figur 4a am oberen Totpunkt lila des Kulissensteins 18.4 leicht durchgebogen, was durch die Biegelinie 51 angedeutet ist, die oberhalb der normalen Längsachse des Verbindungselementes 18.1 (s. auch Waagerechte) liegt. Damit diese Verformung bzw. Durchbiegung des Verbindungselementes 18.1 ohne Schaden an der Antriebsmechanik 18 durchführbar ist, ist ein elastischer Bereich 20 an dem Verbindungselement 18.1 vorgesehen, der in Form einer Einschnürung oder Querschnittsverjüngung 20.1 vorgesehen ist. Der elastische Bereich 20 kann auch durch ein gummielastisches Pufferelement, ein Federelement oder dergleichen realisiert werden. In der Figur 4a wird das Schutzelement 12 mit maximaler Kraft gegen die Dichtung 11.2 gepresst. Dreht nun der Antrieb 14 die Zwischenwelle 18.3 weiter im Uhrzeigersinn (s. Pfeil 52), so verlagert sich der Kulissenstein 18.4 von seinem oberen Totpunkt IIIa auf die normale Längsachse 50 vom Verbindungselement 18.1, wodurch die elastische Verformung (Verbiegung) des Verbindungselementes 18.1 zurückgenommen wird. Trotzdem wird immer noch das Schutzelement 12 gegen die Dichtung 11.2 in der Schließposition IIa gepresst, da die Drehachse 18.21 des Hebels 18.2 für das Schutzelement 12 nicht selber gedreht bzw. bewegt worden ist. Vielmehr wurde nur die Verformung des Verbindungselementes 18.1 durch eine weitere Drehung des Kulissensteins 18.4 im Uhrzeigersinn zurückgenommen.

Aus der Figur 4b dargestellten Stellung ist das Verbindungselement 18.1 nicht mehr zu verstellen, da hierfür eine Drehung der Zwischenwelle 18.3 im Gegenuhrzeigersinn dringend erforderlich ist (s. Pfeil 52). Zu diesem Zweck muss jedoch der Kraftschluss in der oberen Stellung IIIa des Kulissensteins 18.4 überwunden werden, der durch die Verformung des Verbindungselementes 18.1 erzeugt wird. Nur wenn die Zwischenwelle 18.3 im Gegenuhrzeigersinn aus der Figur 4b gedreht wird, lässt sich das hebelförmige Verbindungselement 18.1 im Uhrzeigersinn um die Drehachse 18.21 des Hebels 18.2 drehen bzw. nach unten drücken. Bei dem dargestellten Ausführungsbeispiel aus den Figuren 4a, 4b der erfindungsgemäßen Verstellvorrichtung 10 kann auf ein zusätzliches Rastmittel 16 bzw. Gegenrastmittel 17 verzichtet werden, da alleine der verformbare Bereich 20 die Funktion übernimmt, eine Zusatzkraft im Bereich der Endposition IIa und IIb für das Schutzelement 12 zu erzeugen.

In der Figur 1 befindet sich der Kulissenstein 18.4 befindet sich in seiner unteren Stellung IIIb. Hierbei hat sich der Kulissenstein 18.4 anhand der Zwischenwelle 18.3 um ca. 170° von seiner oberen Stellung lila gedreht und befindet sich in einer ungefähr 7-Uhr-Stellung. Auch in dieser Stellung findet eine Verformung des Verbindungselementes 18.1 statt - wie in Fig. 2 und 4a -, wobei jedoch nunmehr das Verbindungselement 18.1 nach unten gedrückt wird, sodass die entsprechende Biegelinie 51 unterhalb der normalen Längsachse 50 vom Verbindungselement 18.1 liegt.

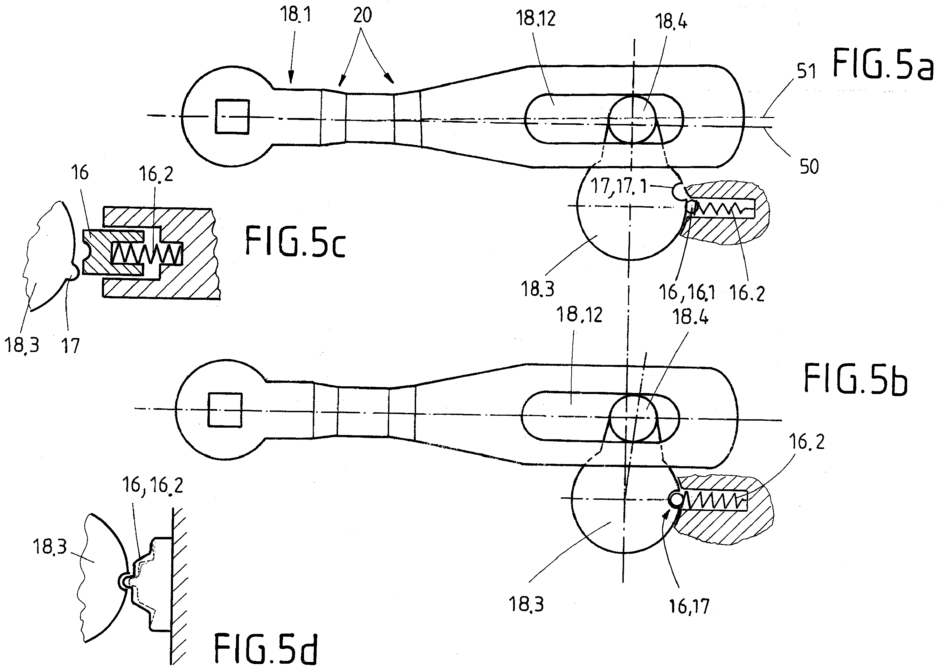

In den weiteren Figuren 5a bis 5d kommt ein zusätzliches Rastmittel 16 und ein entsprechendes Gegenrastmittel 17 zum Einsatz, welches mit der Antriebsmechanik 18 zusammenwirkt, um den zusätzlichen Form- und/oder Kraftschluss zur Sicherung des Schließelementes 12 in seiner Endposition IIa, IIb zu erzeugen. In den Figuren 5a und 5b kommt das vergleichbare Verbindungselement 18.1 aus den Figuren 4a und 4b zum Einsatz. Dieses kann ebenfalls im Bereich der Endposition Ia, Ib verbogen werden, um das Schutzelement 12 in seine Endposition IIa, IIb sicher zu halten bzw. zu fixieren. Allerdings ist die Verformung des hebelförmigen Verbindungselementes 18.1 nur optional zu dem zusätzlichen Rast- 16 und Gegenrastmittel 17 vorstellbar. In der Figur 5a kommt ein Rastmittel 16 zum Einsatz, welches aus einem kugelförmigen Vorsprung 16.1 und einer Feder 16.2 besteht. Durch die Feder 16.2 wird der kugelförmige Vorsprung 16.1 gegen den kreisförmigen Rand der Zwischenwelle 18.3 gepresst. In diesem kreisförmigen Rand ist ein kugelförmige Ausnehmung 17.1 als Gegenrastmittel 17 vorgesehen. In der Figur 5a steht die Zwischenwelle 18.3 in ihrer oberen Stellung lila wobei jedoch das Rastmittel 16 noch nicht mit dem Gegenrastmittel 17 einen zusätzlichen Form- und/oder Kraftschluss bildet.

In der Figur 5b ist jedoch die Zwischenwelle 18.3 etwas weiter im Uhrzeigersinn gedreht worden (im Vergleich zu Fig. 5a), sodass der Kulissenstein 18.4 seine obere Stellung lila verlassen hat. In dieser Drehstellung der Zwischenwelle 18.3 wirkt das kugelförmige Rastmittel 16 form- und auch kraftschlüssig mit dem Gegenrastmittel 17 zusammen, wodurch ein sicherer Halt des Schutzelementes 12 in den Endpositionen IIa, IIb realisiert ist. Durch eine Drehung der Zwischenwelle 18.3 im Gegenuhrzeigersinn wird das Rastmittel 16 aus dem Gegenrastmittel 17 gedrückt, sodass der zusätzliche Form- und Kraftschluss aufgehoben wird. Anschließend lässt sich das Schutzelement 12 durch die Antriebsmechanik 18 normal verstellen. Selbstverständlich kann auch für die untere Stellung IIIb ein entsprechendes Gegenrastmittel 17 als Ausnehmung 17.1 an der Zwischenwelle 18.3 vorgesehen sein.

In den Figuren 5c und 5d sind alternative Ausgestaltungen der Rastmittel 16 und Gegenrastmittel 17 dargestellt. In der Figur 5c ist eine kinematische Umkehr zu den Rastmitteln 16 und Gegenrastmitteln 17 aus den Figuren 5a und 5b gezeigt. Hierbei ist das Rastmittel 16 als Ausnehmung dargestellt, die durch eine Feder 16.2 belastet ist. Das Gegenrastmittel 17 an der Zwischenwelle 18.3 ist als kugelförmiger Vorsprung zu erkennen, der mit der Ausnehmung im Rastmittel 16 mechanisch zusammenwirkt.

In der Figur 5d ist eine weitere Variante des Rastmittels 16 und des Gegenrastmittels 17 dargestellt. Dabei entspricht das Gegenrastmittel 17 im Wesentlichen der Ausnehmung 17.1 aus den Figuren 5a und 5b. Das Rastmittel 16 selbst ist jedoch einteilig ausgestaltet, sodass der Vorsprung 16.1 durch die Feder 16.2 selbst dargestellt ist. Hierbei kann es sich z. B. um eine Blattfeder oder Schenkelfeder oder dergleichen handeln, die mit ihrem Vorsprung 16.1 mit der Ausnehmung 17.1 des Gegenrastmittels form- und/oder kraftschlüssig zusammenwirkt.

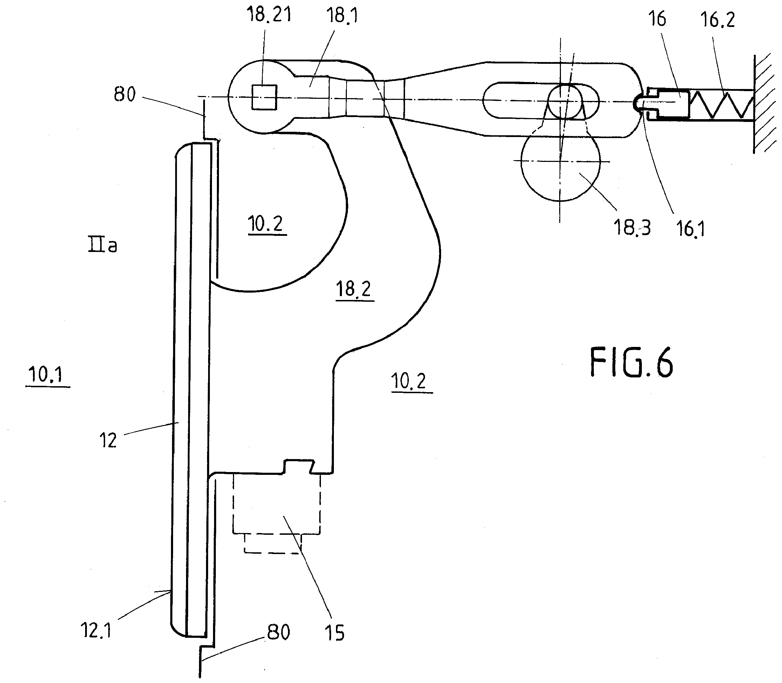

In der Figur 6 ist schematisch eine Seitenansicht auf wesentliche Elemente der Verstellvorrichtung 10 dargestellt, um einen Großteil der Antriebsmechanik 18 zu zeigen. Hieraus wird auch noch einmal deutlich, wie die Drehbewegung der Zwischenwelle 18.3 über den Kulissenstein 18.4 auf das Verbindungselement 18.1 übertragen wird, wodurch dann der Hebel 18.2 mit dem Schutzelement 12 verstellt wird. Zusätzlich ist in der Figur 6 eine weitere Alternative zu dem Rastelement 16 und dem Gegenrastelement 17 dargestellt. Dabei wirkt das Rastelement 16 mit einem abgerundeten Vorsprung 16.1 auf das Ende des Verbindungselementes 18.1 ein, welches zur Zwischenwelle 18.3 gerichtet ist. An der Außenkontur des Verbindungselementes 18.1 ist eine Ausnehmung 17.1 vorgesehen, die als Gegenrastmittel 17 mit dem Rastmittel 16 form- und kraftschlüssig zusammenwirkt. Das Rastmittel 16 weist hierzu ebenfalls eine Feder 16.2 auf. In der Figur 6 ist als Funktionseinheit 15 ein Betätigungselement 15.1 angedeutet, welches dazu dient, z. B. ein Schloss für eine Heckklappe mechanisch oder elektromechanisch zu betätigen, um diese öffnen zu können.

### Bezugszeichenliste

- 10: Verstellvorrichtung
- 10.1: Außenbereich
- 10.2: Innenbereich
- 11: Aktiveinheit
- 11.1: Haltemittel für 13
- 11.2: Dichtung
- 12: Schutzelement
- 12.1: Außenseite
- 12.2: Innenseite
- 13: Antriebseinheit
- 13.1: Gegenhaltemittel für 11
- 14: Antrieb
- 15: Funktionseinheit
- 15.1: Kamera, Schließzylinder oder Betätigungselement
- 15.2: Objektiv
- 16: Rastmittel
- 16.1: Vorsprung
- 16.2: Feder
- 17: Gegenrastmittel
- 17.1: Ausnehmung
- 18: Antriebsmechanik
- 18.1: Verbindungselement
- 18.11: drehfeste Verbindung
- 18.12: Führung
- 18.2: Hebel für 12
- 18.21: Drehachse
- 18.3: Zwischenwelle
- 18.4: Kulissenstein
- 18.5: Schneckengetriebe
- 19: Befestigungsmittel
- 20: elastischer Bereich
- 20.1: Einschnürung
- 21: Puffer
- 22: Elektrische Leitung
- 23: Stecker

- 50: Längsachse
- 51: Biegelinie
- 52: Pfeil für Drehrichtung

- 80: Trägerelement
- 81: Umbördelung

- Ia: Befestigungslage
- Ib: Montagelage
- IIa: Schließposition
- IIb: Öffnungsposition
- IIIa: oberer Stellung
- IIIb: untere Stellung

## Patentansprüche

1. Verstellvorrichtung (10) für Fahrzeuge oder dergleichen, mit zumindest einem Schutzelement (12), insbesondere in Form eines Deckels, um einen Innenbereich (10.2) hinter dem Schutzelement (12) verschließbar auszugestalten, und mit einer als Funktionseinheit (15), die hinter dem Schutzelement (12) im Innenbereich (10.2) angeordnet ist, und mit zumindest einem Antrieb (14), wodurch das Schutzelement (12) zwischen zumindest zwei Endpositionen (IIa, IIb) bewegbar ist, nämlich in eine Schließposition (IIa), in der das Schutzelement (12) den Innenbereich (10.2) verschließt, und in eine Öffnungsposition (IIb), in der das Schutzelement (12) den Innenbereich (10.2) öffnet, wobei die Funktionseinheit (15) eine Kameraeinheit, ein Schließzylinder und/oder ein Betätigungselement enthält, wobei das Schutzelement (12) im Bereich der Endpositionen (IIa, IIb) zusätzlich form- und/oder kraftschlüssig fixiert ist, um das Schutzelement (12) auch bei störenden mechanischen Einwirkungen in diesen Endpositionen (IIa, IIb) zu halten, wobei die Funktionseinheit (15) fest an einer Innenseite (12.2) von dem Schutzelement (12) befestigt ist und einer Bewegung des Schutzelementes (12) folgt.

2. Verstellvorrichtung (10) nach einem der vorhergehenden Ansprüche, **dadurch gekennzeichnet, dass** der zusätzliche Form- und/oder Kraftschluss im Bereich der Endpositionen (IIa, IIb) durch ein Rastmittel (16) erzeugbar ist.

3. Verstellvorrichtung (10) nach einem der vorhergehenden Ansprüche,
**dadurch gekennzeichnet, dass** das Rastmittel (16) direkt mit dem Schutzelement (12), einer Antriebsmechanik (18) und/oder dem Antrieb (14) mechanisch zusammenwirkt.

4. Verstellvorrichtung (10) nach einem der vorhergehenden Ansprüche,
**dadurch gekennzeichnet, dass** das Rastmittel (16) als federnder Vorsprung (16.1) ausgestaltet ist und mit einem Gegenrastmittel (17) in Form einer Ausnehmung (17.1) zusammenwirkt, wodurch der zusätzliche Form- und/oder Kraftschluss gebildet ist.

5. Verstellvorrichtung (10) nach einem der vorhergehenden Ansprüche, **dadurch gekennzeichnet, dass** eine Antriebsmechanik (18) zwischen dem Antrieb (14) und dem Schutzelement (12) angeordnet ist und der zusätzliche Kraftschluss durch einen elastisch verformbaren Bereich (20), insbesondere von der Antriebsmechanik (18), dem Antrieb (14) und/oder dem Schutzelement (12), erzeugbar ist.

6. Verstellvorrichtung (10) nach einem der vorhergehenden Ansprüche,
**dadurch gekennzeichnet, dass** der Antrieb (14) und/oder die Antriebsmechanik (18) selbsthemmend ausgestaltet ist, so dass eine Verstellung des Schutzelementes (12) ausschließlich über den Antrieb (14) erfolgt.

7. Verstellvorrichtung (10) nach einem der vorhergehenden Ansprüche, **dadurch gekennzeichnet, dass** die Antriebsmechanik (18) ein Verbindungselement (18.1) aufweist, welches insbesondere über einen elastischen Bereich (20) verfügt.

8. Verstellvorrichtung (10) nach einem der vorhergehenden Ansprüche, **dadurch gekennzeichnet, dass** der zusätzliche Kraftschluss im Bereich der Endpositionen (IIa, IIb) des Schutzelementes (12) überwunden werden muss, um von einer Endpositionen (IIa, IIb) in die andere Endpositionen (IIb, IIa) zu gelangen.

9. Verstellvorrichtung (10) nach einem der vorhergehenden Ansprüche, **dadurch gekennzeichnet, dass** zumindest der Antrieb (14) für das Schutzelement (12) in einer Antriebseinheit (13) angeordnet ist und das Schutzelement (12) an einer Aktiveinheit (11) vorgesehen ist, und dass die Antriebseinheit (12) im zusammengebauten Zustand der Verstellvorrichtung (10) bewegbar zur Aktiveinheit (11) ausgestaltet ist, wobei insbesondere die Antriebseinheit (13) in einer Befestigungslage (la) fest mit der Aktiveinheit (11) verbunden ist.

10. Verstellvorrichtung (10) nach einem der vorhergehenden Ansprüche, **dadurch gekennzeichnet, dass** die Antriebseinheit (13) mechanisch über zumindest einen Teil der Antriebsmechanik (18), insbesondere dem Verbindungselement (18.1), mit der Aktiveinheit (11) verbunden ist, um die Antriebsleistung des Antriebs (14) auf das Schutzelement (12) zu übertragen.

11. Verfahren zum Betrieb einer Verstellvorrichtung (10) nach einem der Ansprüche 1 bis 10, Fahrzeuge oder dergleichen, mit zumindest einem Schutzelement (12), insbesondere in Form eines Deckels, um einen Innenbereich (10.2) hinter dem Schutzelement (12) verschließbar auszugestalten, und mit einer Funktionseinheit (15), die hinter dem Schutzelement (12) im Innenbereich (10.2) angeordnet ist, und mit zumindest einem Antrieb (14), wodurch das Schutzelement (12) zwischen zumindest zwei Endpositionen (IIa, IIb) bewegbar ist, nämlich in eine Schließposition (IIa), in der das Schutzelement (12) den Innenbereich (10.2) verschließt, und in eine Öffnungsposition (IIb), in der das Schutzelement (12) den Innenbereich (10.2) öffnet, **dadurch gekennzeichnet, dass** das Schutzelement (12) im Bereich der Endpositionen (IIa, IIb) zusätzlich form- und/oder kraftschlüssig fixiert wird, um das Schutzelement (12) auch bei störenden mechanischen Einwirkungen in diesen Endpositionen (IIa, IIb) zu halten.

## Claims

1. Adjustment device (10) for motor vehicles or the like, having at least one protective element (12), in particular in the form of a cover to enable a construction in which an interior region (10.2) is closable behind the protective element (12), and having a functional unit (15) which is arranged in the interior region (10.2) behind the protective element (12), and having at least one drive (14) by which the protective element (12) is movable between at least two end positions (IIa, IIb), namely into a closing position (IIa) in which the protective element (12) closes the interior region (10.2), and into an opening position (IIb) in which the protective element (12) opens the interior region (10.2), wherein the functional unit (15) contains a camera unit, a closing cylinder and/or an actuating element, wherein the protective element (12) is additionally fixed in form-fitting and/or force-fitting manner in the region of the end positions (IIa, IIb) in order to retain the protective element (12) in said end positions (IIa, IIb) even against the effects of disruptive mechanical influences, wherein the functional unit (15) is attached firmly to an inner side (12.2) of the protective element (12) and follows a movement of the protective element (12).

2. Adjustment device (10) according to any one of the preceding claims, **characterized in that** the additional form-fitting and/or force-fitting closure in the region of the end positions (IIa, IIb) can be created with a detent means (16).

3. Adjustment device (10) according to any one of the preceding claims, **characterized in that** the detent means (16) cooperates mechanically directly with the protective element (12), a drive mechanism (18) and/or the drive (14).

4. Adjustment device (10) according to any one of the preceding claims, **characterized in that** the detent means (16) is designed as a resilient projection (16.1) and cooperates with a counter-detent means (17) in the form of a recess (17.1), thereby forming the additional form-fitting and/or force-fitting closure.

5. Adjustment device (10) according to any one of the preceding claims, **characterized in that** a drive mechanism (18) is disposed between the drive (14) and the protective element (12), and the additional force-fitting closure can be created by an elastically deformable region (20) particularly of the drive mechanism (18), the drive (14) and/or the protective element (12).

6. Adjustment device (10) according to any one of the preceding claims, **characterized in that** the drive (14) and/or the drive mechanism (18) is/are designed to be self-locking, so that an adjustment of the protective element (12) only takes place via the drive (14).

7. Adjustment device (10) according to any one of the preceding claims, **characterized in that** the drive mechanism (18) includes a connecting element (18.1) which in particular has an elastic region (20).

8. Adjustment device (10) according to any one of the preceding claims, **characterized in that** the additional force-fitting closure in the region of the end positions (IIa, IIb) of the protective element (12) must be overcome to enable a shift from one end position (IIa, IIb) to another end position (IIb, IIa).

9. Adjustment device (10) according to any one of the preceding claims, **characterized in that** at least the drive (14) for the protective element (12) is disposed in a drive unit (13), and the protective element (12) is provided on an active unit (11), and that with the adjustment device (10) in the assembled state the drive unit (12) is configured to be movable towards the active unit (11), wherein in particular the drive unit (13) is connected firmly to the active unit (11) in a fastening position (Ia).

10. Adjustment device (10) according to any one of the preceding claims, **characterized in that** the drive unit (13) is connected mechanically to the active unit (11) via at least a part of the drive mechanism (18), particularly the connecting element (18.1), for transmitting the driving power of the drive (14) to the protective element (12).

11. Method for operating an adjustment device (10) for motor vehicles or the like according to any one of Claims 1 to 10, having at least one protective element (12), in particular in the form of a cover to enable a construction in which an interior region (10.2) is closable behind the protective element (12), and having a functional unit (15) which is arranged in the interior region (10.2) behind the protective element (12), and having at least one drive (14) by which the protective element (12) is movable between at least two end positions (IIa, IIb), namely into a closing position (IIa) in which the protective element (12) closes the interior region (10.2), and into an opening position (IIb) in which the protective element (12) opens the interior region (10.2), **characterized in that** the protective element (12) is additionally fixed in form-fitting and/or force-fitting manner in the region of the end positions (IIa, IIb) in order to retain the protective element (12) in said end positions (IIa, IIb) even against the effects of disruptive mechanical influences.

## Revendications

1. Dispositif de réglage (10) pour véhicules ou autres choses de ce genre, avec au moins un élément de protection (12), notamment sous la forme d'un couvercle, pour constituer une zone intérieure (10.2) pouvant être fermée derrière l'élément de protection (12) et avec une unité fonctionnelle (15) en tant que telle qui est disposée derrière l'élément de protection (12) dans la zone intérieure (10.2) et avec au moins un système d'entraînement (14), l'élément de protection (12) pouvant être de ce fait mobile entre au moins deux positions extrêmes (IIa, IIb), notamment dans une position de fermeture (IIa) dans laquelle l'élément de protection (12) ferme la zone intérieure (10.2) et dans une position d'ouverture (IIb) dans laquelle l'élément de protection (12) ouvre la zone intérieure (10.2), l'unité fonctionnelle (15) contenant un ensemble de caméra, un cylindre de fermeture et/ou un élément d'actionnement, l'élément de protection (12) étant en plus fixé par conformité de forme et/ou de force dans la zone des positions extrêmes (IIa, IIb) pour maintenir l'élément de protection (12) dans ces positions IIa, IIb) même sous des effets mécaniques perturbateurs, l'unité fonctionnelle (15) étant fixée fermement à une face intérieure (12.2) par l'élément de protection (12) et suivant un mouvement de l'élément de protection (12).

2. Dispositif de réglage (10) selon la revendication précédente, **caractérisé en ce que** la conformité de forme et/ou de force peut être produite dans la zone des positions extrêmes (IIa, IIb) par un moyen d'encliquetage (16).

3. Dispositif de réglage (10) selon l'une quelconque des revendications précédentes, **caractérisé en ce que** le moyen d'encliquetage (16) coopère mécaniquement directement avec l'élément de protection (12), un mécanisme d'entraînement (18) et/ou le système d'entraînement (14).

4. Dispositif de réglage (10) selon l'une quelconque des revendications précédentes, **caractérisé en ce que** le moyen d'encliquetage (16) est constitué en tant qu'élément en saillie faisant ressort (16.1) et coopère avec un moyen opposé d'encliquetage (17) sous la forme d'un évidement (17.1), la conformité de forme et/de force supplémentaire étant de ce fait constituée.

5. Dispositif de réglage (10) selon l'une quelconque des revendications précédentes, **caractérisé en ce qu'**un mécanisme d'entraînement (18) est disposé entre le système d'entraînement (14) et l'élément de protection (12) et la conformité de force supplémentaire peut être produite par une zone élastiquement déformable (20), notamment par le mécanisme d'entraînement (18), le système d'entraînement (14) et/ou l'élément de protection (12).

6. Dispositif de réglage (10) selon l'une quelconque des revendications précédentes, **caractérisé en ce que** le système d'entraînement (14) et/ou le mécanisme d'entraînement (18) est constitué autobloquant de telle sorte qu'un réglage de l'élément de protection (12) n'intervient que par le biais du système d'entraînement (14).

7. Dispositif de réglage (10) selon l'une quelconque des revendications précédentes, **caractérisé en ce que** le mécanisme d'entraînement (18) comporte un élément de liaison (18.1), lequel dispose notamment d'une zone élastique (20).

8. Dispositif de réglage (10) selon l'une quelconque des revendications précédentes, **caractérisé en ce que** la conformité de force supplémentaire doit être surmontée dans la zone des positions extrêmes (IIa, IIb) de l'élément de protection (12) pour parvenir d'une des positions extrêmes (IIa, IIb) aux autres positions extrêmes (IIb, IIa).

9. Dispositif de réglage (10) selon l'une quelconque des revendications précédentes, **caractérisé en ce qu'**au moins le système d'entraînement (14) est disposé pour l'élément de protection (12) dans une unité d'entraînement (13) et l'élément de protection (12) est prévu sur une unité d'activation (11) et **en ce que** l'unité d'entraînement (12) est constituée pouvant bouger par rapport à l'unité d'activation (11) à l'état monté du dispositif de réglage (10), l'unité d'entraînement (13) étant notamment reliée fermement à l'unité d'activation (11) dans une position de fixation (la).

10. Dispositif de réglage (10) selon l'une quelconque des revendications précédentes, **caractérisé en ce que** l'unité d'entraînement (13) est reliée mécaniquement à l'unité d'activation (11) par au moins une partie du mécanisme d'entraînement (18), notamment par l'élément de liaison (18.1) pour transmettre la puissance motrice du système d'entraînement (14) à l'élément de protection (12).

11. Procédé pour faire fonctionner un dispositif de réglage (10) selon l'une quelconque des revendications 1 à 10 pour véhicules ou autres choses de ce genre, avec au moins un élément de protection (12), notamment sous la forme d'un couvercle, pour constituer une zone intérieure (10.2) pouvant être fermée derrière l'élément de protection (12) et avec une unité fonctionnelle (15), qui est disposée dans la zone intérieure (10.2) derrière l'élément de protection (12) et avec au moins un système d'entraînement (14), l'élément de protection (12) pouvant être de ce fait bougé entre au moins deux positions extrêmes (IIa, IIb), notamment dans une position de fermeture (IIa), dans laquelle l'élément de protection (12) ferme la zone intérieure (10.2) et dans une position d'ouverture (IIb) dans laquelle l'élément de protection (12) ouvre la zone intérieure (10.2), **caractérisé en ce que** l'élément de protection (12) est fixé en plus par conformité de forme et/ou de force dans la zone des positions extrêmes (IIa, IIb) pour maintenir l'élément de protection (12) dans ces positions extrêmes (IIa, IIb) même sous des effets mécaniques pertubateurs.
